Europäisches Patentamt

European Patent Office

Office européen des brevets

(11) Veröffentlichungsnummer: **0 272 525 B1**

(19)

(12) **EUROPÄISCHE PATENTSCHRIFT**

(45) Veröffentlichungstag der Patentschrift: **03.02.93**

(21) Anmeldenummer: **87118049.3**

(22) Anmeldetag: **07.12.87**

(51) Int. Cl.⁵: **C09D 163/00**, C08G 59/58

(54) **Verfahren zur Herstellung von wasserverdünnbaren Lackbindemitteln.**

(30) Priorität: **23.12.86 AT 3413/86**

(43) Veröffentlichungstag der Anmeldung:
**29.06.88 Patentblatt 88/26**

(45) Bekanntmachung des Hinweises auf die
Patenterteilung:
**03.02.93 Patentblatt 93/05**

(84) Benannte Vertragsstaaten:
**DE ES FR IT SE**

(56) Entgegenhaltungen:
**FR-A- 2 293 480**
**FR-A- 2 445 354**

**CHEMICAL ABSTRACTS, Band 87, Nr. 12, 4. Juli 1977, Seite 81, Zusammenfassung Nr. 86391j, Columbus, Ohio, US; H. RAUCH-PUNTIGAM: "Chemistry and technology of synethetic resins used in water-dilutable paints" & PINT. ACABADOS IND., (Secc.): RECUMBRIMIENTOS ORG. 1976, 17(27), 35-49**

(73) Patentinhaber: **Vianova Kunstharz Aktiengesellschaft**

**A-8402 Werndorf(AT)**

(72) Erfinder: **Staritzbichler, Werner, Dr. Chem.
Im Hoffeld 6
A-8046 Graz(AT)**
Erfinder: **Dworak, Gert, Dr. Chem.
Dr. Robert Grafstrasse 25
A-8010 Graz(AT)**
Erfinder: **Daimer, Wolfgang. Dipl.-Ing.
Rosenberggürtel 37
A-8010 Graz(AT)**

**Beschreibung**

Die Erfindung betrifft ein Verfahren zur Herstellung von wasserverdünnbaren Lackbindemitteln zur Formulierung umweltfreundlicher, nur untergeordnete Anteile an organischen Lösemitteln aufweisender ofentrocknender Lacke. Die Bindemittel sind partielle Kondensationsprodukte aus (A) einem nach Neutralisation wasserlöslichen Polykondensations-, Polymerisations- oder Polyadditionsharz als filmbildende Polycarboxylverbindung (PC-Komponente) und (B) einem unter den üblichen Verarbeitungsbedingungen wasserunlöslichen, Hydroxylgruppen tragenden Epoxidharz-Aminaddukt (PH-Komponente).

Aus der AT-PS 328 587 sind bereits Kombinationen von nach Neutralisation wasserlöslichen, filmbildenden Polycarboxylverbindungen mit wasserunlöslichen Polyhydroxylverbindungen auf der Basis von Polyestern, Polyurethanen oder Copolymerisaten bekannt.

Diese Lackbindemittel zeichnen sich dadurch aus, daß bei ihnen das sonst bei Harzen, die aufgrund einer Salzbildung ihre Wasserverdünnbarkeit erlangen, auftretende anomale Viskositätsverhalten beim Verdünnen mit Wasser nicht auftritt.

Dieses Verfahren kann gemäß AT-PS 369 412 durch eine spezifische Auswahl wesentlicher Kennzahlen für die Vorprodukte (PC-Komponente und PH-Komponente) erweitert werden. Die so erhaltenen Bindemittel können zur Formulierung von lufttrocknenden Lacken herangezogen werden.

Aus diesen Bindemitteln lassen sich Lacke formulieren, die trotz ihres niedrigen Gehaltes an organischen Hilfslösemitteln gut und einfach verarbeitet werden können. Die erhaltenen Filme zeigen ausgezeichnete dekorative Eigenschaften. Die korrosionsschützende Wirkung von Lacken auf dieser Basis entspricht jedoch, insbesonders wenn die Formulierung keine zusätzlichen Korrosionsschutzpigmente enthält, nicht mehr den immer höher werdenden Ansprüchen der Praxis an ofentrocknende Grundierungen und Einschichtlacke.

Es wurde nun gefunden, daß dieser Nachteil in diesen von ihrer Rheologie her besonders vorteilhaften Materialien überwunden werden kann, wenn man ausgewählte Gruppen von PC-Komponenten mit PH-Komponenten auf der Basis von Epoxidharz-Aminaddukten durch partielle Kondensation kombiniert.

Die vorliegende Erfindung betrifft demgemäß ein Verfahren zur Herstellung von lösemittelarmen, nach teilweiser oder vollständiger Überführung in die Ammonium-und/oder Aminsalzform wasserverdünnbaren Bindemitteln für ofentrocknende Überzugsmittel auf der Basis von Kombinationen einer filmbildenden wasserverdünnbaren Polycarboxylverbindung (PC-Komponente) mit einer filmbildenden wasserunlöslichen Polyhydroxylverbindung (PH-Komponente), welches dadurch gekennzeichnet ist, daß man

(A) 10 - 90 Gew.-%, vorzugsweise 20 - 50 Gew.-%,

(Aa) eines oder mehrerer Anlagerungsprodukte von Maleinsäure(anhydrid) an ungesättigte Öle und/oder Fettsäuren, deren Anhydridgruppen mit Wasser und/oder Monoalkoholen aufgeschlossen sind und welche eine Säurezahl zwischen 50 und 400 mg KOH/g und eine Grenzviskositätszahl von 4,5 - 8,0 ml/g (gemessen in N,N-Dimethylformamid (DMF) bei 20 Grad C) aufweisen

und/oder

(Ab) eines oder mehrerer Copolymerisate mit einer Säurezahl zwischen 100 und 200 mg KOH/g und einer Grenzviskositätszahl zwischen 4,5 und 8 ml/g (gemessen in DMF/20 Grad C)

mit

(B) 90 - 10 Gew.-%, vorzugsweise 50 bis 80 Gew.-% eines unter den Verarbeitungsbedingungen praktisch wasserunlöslichen Epoxidharz-Aminadduktes, welches eine Hydroxylzahl zwischen 50 und 300 mg KOH/g und eine Grenzviskositätszahl von 9 bis 12 ml/g, vorzugsweise zwischen 10 und 11 ml/g (gemessen in DMF/20 Grad C) aufweist,

bei 80 - 140 Grad C bis zu einer Grenzviskositätszahl von 14 - 19 ml/g (gemessen in DMF/20 Grad C) kondensiert.

Die Erfindung betrifft weiters die Verwendung der so hergestellten Lackbindemittel, in Kombination mit den üblichen Vernetzungskomponenten, wie Phenol-, Melamin-, Harnstoff-, Benzoguanamin- oder Glykolurilharzen, zur Formulierung von wasserverdünnbaren Lacken.

Überraschenderweise wird durch den Einsatz der kationischen Komponente (B) die Korrosionsfestigkeit, sowie auch die Verseifungs- und Chemikalienfestigkeit, insbesonders auf nichtvorbehandeltem Stahlblech, wesentlich verbessert.

Die filmbildenden Polycarboxylverbindungen (Komponente A) können als makromolekulare Emulgatoren aufgefaßt werden, die nach der Vernetzung des Überzugs als integrierende Bestandteile am Filmaufbau beteiligt sind. Geeignete Ausgangsmaterialien für die filmbildende Polycarboxylkomponente (PC-Komponente) sind für die vorliegende Erfindung im wesentlichen Harze, wie sie auch in der AT-PS 328 587 eingesetzt werden. Zur Erzielung der obengenannten Ergebnisse in Kombination mit der erfindungsgemäß eingesetzten Komponente (B) muß die Komponente (A) eine Grenzviskositätszahl, gemessen in DMF bei 20 Grad C, zwischen 4,5 und 9,0 ml/g aufweisen.

Für die vorliegende Erfindung besonders geeignet sind Anlagerungsverbindungen von Maleinsäurenanhydrid an trocknende Öle, sowie an die diesen Ölen zugrundeliegenden Fettsäuren und hydroxylgruppenfreie Ester dieser Fettsäuren mit anderen Polyalkoholen. Auch Anlagerungsverbindungen von Maleinsäureanhydrid an flüssige Polydiene, wie niedrigmolekulare Butadienpolymere oder Isoprenpolymere, sowie entsprechende Mischpolymere können für die Komponente (A) herangezogen werden. Vor der erfindungsgemäßen Verwendung dieser Addukte werden die Anhydridgruppen mit Wasser oder Monoalkoholen oder Glykolmonoethern aufgespalten.

Darüberhinaus können auch Copolymerisate, die durch den Einbau einer entsprechenden Menge von (Meth)acrylsäure oder Maleinsäure die für die Wasserlöslichkeit notwendige Säurezahl zwischen 100 und 200 mg KOH/g aufweisen, als PC-Komponente eingesetzt werden. Als Comonomere dienen die üblichen (Meth)acrylsäureester, Vinylaromaten und andere, dem Fachmann geläufige, Acrylmonomere.

Die Herstellung der Maleinsäureaddukte bzw. der Copolymerisate erfolgt in bekannter Weise und bedarf keiner weiteren Erklärung. Dies gilt auch für die Aufspaltung der Anhydridkonfigurationen der Adduktverbindungen. Als Komponente (B) der Polyhydroxylkomponente werden gemäß der vorliegenden Erfindung Umsetzungsprodukte von Epoxidverbindungen mit sekundären oder primären Aminen, also die sogenannten Epoxid-Aminaddukte eingesetzt.

Ausgangsmaterialien für diese Produkte sind die handelsüblichen Diepoxidharze mit einem Epoxidäquivalentgewicht von ca. 190 bis 2000 auf der Basis von Dialkoholen oder Diphenolen. Besonders geeignet sind die auf dem Bisphenol A basierenden Diepoxidharze. Eine weitere Gruppe von brauchbaren Epoxidharzen sind die handelsüblichen Novolak-Epoxidharze. Monoepoxidverbindungen, wie Glycidylether, Glycidylester oder Olefinoxide können gegebenenfalls in Mischung mit den höherfunktionellen Epoxidharzen verwendet werden. Die Diepoxidharze können vor der Umsetzung mit dem Amin in mannigfaltiger Weise modifiziert werden, wobei z. B. durch Umsetzungen mit Diolen, Diphenolen, Dicarbonsäuren, Lactondiolen, Diaminen oder primären Monoaminen Kettenverlängerungen erfolgen können.

Als Amine werden vorzugsweise sekundäre Alkanolamine allein oder zusammen mit sekundären Alkylaminen eingesetzt. Besonders bevorzugt sind Dialkanolamine.

Zur Erzielung der notwendigen Grenzviskositätszahl der Epoxid-Aminaddukte werden entweder Epoxidharze mit höheren Molekulargewicht eingesetzt oder das Molekulargewicht durch Reaktion der Epoxid-Aminaddukte mit Di- oder Polyisocyanaten erhöht.

Die erfindungsgemäß als Komponente (B) eingesetzten Produkte weisen eine Grenzviskositätszahl von 9 bis 12 ml/g, gemessen in DMF/20 Grad C, auf. Sie müssen überdies eine Hydroxylzahl von 50 bis 300 mg KOH/g aufweisen, die aus den bei der Aminoaddition resultierenden Hydroxylgruppen, den Hydroxylgruppen des Alkanolamines und gegebenenfalls aus den Kettenverlängerungsmitteln stammen kann.

Die bevorzugten Epoxid-Aminaddukte sind aus Diepoxidharzen und Dialkanolaminen aufgebaut, wobei das gewünschte Molekulargewicht, ausgedrückt durch die Grenzviskositätszahl, durch dosierte Reaktion mit einem Diisocyanat, wie Toluylen-, Isophoron-, Hexamethylendiisocyanat oder einem Diisocyanatpräpolymeren, wie ein 3 : 1-Addukt aus Trimethylolpropan und Toluylendiisocyanat eingestellt wird.

Eine weitere Möglichkeit zur Modifizierung der PH-Komponente besteht in der Reaktion der Epoxid-Aminaddukte mit Di-oder Polyisocyanaten in Gegenwart weiterer Hydroxylgruppen tragender Polykondensations- oder Polyadditionsprodukte. Als modifizierende Komponenten können dabei modifizierte oder unmodifizierte Polyester, Acrylcopolymere oder auch andere Epoxid-Aminaddukte verwendet werden, deren Grenzviskositätszahl (DMF/20 Grad C) nicht über ca. 8 ml/g liegt. Auf diese Weise können sowohl die Grenzviskosität des Epoxid-Aminadduktes, als auch die Eigenschaften des Endproduktes beeinflußt werden.

Die Komponenten (A) und (B) werden bei 80 bis 140 Grad C partiell kondensiert, bis eine Grenzviskositätszahl, gemessen in DMF/20 Grad C, von 14 - 19 ml/g erreicht ist. Selbstverständlich ist dabei darauf zu achten, daß bei der Kondensation der lösliche Zustand des Produktes nicht überschritten wird. Als besonders günstig hat es sich gezeigt, wenn die eingesetzten Komponenten (A) und (B) Grenzviskositätswerte aufweisen, deren Quotient, GVZ (B) : GVZ (A), zwischen 1,4 und 2,7 liegt.

Sowohl die Herstellung der Epoxid-Aminaddukte als auch die partielle Kondensation erfolgt vorteilhafterweise in Gegenwart von organischen Lösemitteln, wobei bevorzugt wassertolerante Lösemittel, wie Glykolmono- oder -diether oder Ketone, verwendet werden.

Die Bindemittel sind nach zumindest teilweiser Neutralisation der Carboxylgruppen mit Basen, wie Ammoniak, Alkalihydroxiden oder vorzugsweise organischen Aminen mit Wasser praktisch unendlich verdünnbar. Es entstehen dabei klare bis opake Lösungen, die in den üblichen Verdünnungsbereichen eine ausgezeichnete Lagerfähigkeit aufweisen.

Aus den Bindemitteln können korrosionsfeste Grundierungen oder Einschichtlacke formuliert werden. Ein spezielles Einsatzgebiet für die erfindungsgemäß hergestellten Produkte sind Zwischenschichtlacke, wie sie beispielsweise als Füller in der Automobilindustrie eingesetzt werden. Die Produkte zeigen auch ohne spezielle Korrosionsschutzpigmente gute Beständigkeitseigenschaften.

Die Formulierung der Lacke für die verschiedenen Einsatzzwecke, sowie die Herstellung und Verarbeitung solcher Lacke, sind dem Fachmann bekannt und der Fachliteratur zu entnehmen.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Beispiel 1 :

Komponente (A1):

In einem geeigneten Reaktionsgefäß wird eine Mischung aus 165 Tlen dehydratisiertem Rizinusöl (DCO) und 135 Tlen Leinöl 1 Stunde bei 250 Grad C umgeestert. Nach Kühlen auf 170 Grad C werden 100 Tle Maleinsäureanhydrid zugegeben und bei 210 Grad C so lange reagiert, bis keine freie Maleinsäure mehr nachweisbar ist. Die Adduktverbindung wird auf 90 Grad C gekühlt und nach Zusatz einer Mischung aus 30 Tlen Wasser und 3 Tlen Triethylamin hydrolisiert, bis eine Säurezahl von ca. 200 mg KOH/g erreicht ist. Der Ansatz wird dann mit Methoxypropanol auf einen Festkörpergehalt von 80 % verdünnt.

Komponente (B1):

475 Tle eines Bisphenol A-Epoxidharzes (EEG ca. 475) werden in 100 Tlen Diethylenglykoldimethylether (DGM) gelöst. Bei 80 Grad C wird eine Mischung aus 105 Tlen Diethanolamin und 45 Tlen DGM zugegeben und bis zur praktisch vollständigen Umsetzung reagiert. Dann wird der Ansatz mit Methylethylketon auf einen Festkörpergehalt von 65 % eingestellt und durch portionsweise Zugabe von ca. 40 Tlen Toluylendisocyanat die Grenzviskositätszahl (gemessen in Dimethylformamid (DMF)/20 Grad C) bis auf ca. 10 ml/g gesteigert. Anschließend wird das Lösemittel im Vakuum bis auf einen Festkörpergehalt von 80 % abgezogen.

Erfindungsgemäße Kombination (C1):

25 Tle der Komponente (A1) und 100 Tle der Komponente (B1) werden gemischt. Die partielle Kondensation erfolgt bei ca. 100 Grad C, bis eine Grenzviskositätszahl (gemessen in DMF/20 Grad C) von 16 ml/g erreicht ist. Die Säurezahl des Kondensates liegt bei ca. 42 mg KOH/g Nach Abkühlen wird der Ansatz mit 6 Tlen Dimethylethanolamin neutralisiert und mit deionisiertem Wasser auf einen Festkörpergehalt von 35 % verdünnt.

Beispiel 2 :

Komponente (B2/1): 1. Reaktionsstufe

In einem geeigneten Reaktionsgefäß werden 150 Tle Triethylenglykol, 134 Tle Trimethylolpropan und 148 Tle Phthalsäureanhydrid auf eine Temperatur von 220 Grad C gebracht und bei dieser Temperatur so lange verestert, bis eine Säurezahl von ca. 3 mg KOH/g erreicht ist. Die Viskosität DIN 53 211/20°C (70%ig in Butylglykol) liegt zwischen 75 und 125 Sekunden.

Komponente (B2/2): 2. Reaktionsstufe

Zu einer Mischung aus 105 Tlen Diethanolamin, 116 Tlen Komponente (B2/1) und 74 Tlen Diglykoldimethylether werden bei 80 Grad C 594 Tle einer Lösung, bestehend aus 475 Tlen eines Bisphenol A-Epoxidharzes (EEG ca. 475) und 119 Tlen Diglykoldimethylether, portionsweise zugegeben und bis zur praktisch vollständigen Umsetzung der Oxirangruppen reagiert.

Dann werden 75 Tle Cardura E zugegeben, die Temperatur wird auf 160 Grad C gesteigert und so lange gehalten, bis keine freien Epoxidgruppen mehr nachweisbar sind.

Bei 70 Grad C wird der Ansatz mit Methylethylketon auf einen Festkörpergehalt von 66 % eingestellt und durch portionsweise Zugabe von ca. 45 Tlen Toluylendiisocyanat die Grenzviskositätszahl (gemessen in DMF/20°C) bis auf ca. 10,3 ml/g gesteigert. Anschließend wird das Lösungsmittel bis auf einen Festkörpergehalt von 80 % im Vakuum abgezogen.

4

<u>Erfindungsgemäße Kombination (C2):</u>

25 Tle der Komponente (A1) und 100 Tle der Komponente (B2/2) werden gemischt. Die partielle Kondensation erfolgt bei ca. 105 Grad C, bis eine Grenzviskositätszahl (gemessen in DMF/20°C) von ca. 17 ml/g erreicht ist.

Die Säurezahl des Kondensates liegt zwischen 25 und 35 mg KOH/g. Nach Abkühlen auf 90 Grad C wird der Ansatz mit 6 Tlen Dimethylethanolamin neutralisiert und mit deionisiertem Wasser auf einen Festkörperghalt von 35 % verdünnt.

Beispiel 3:

<u>Komponente (A3):</u>

In einem geeigneten Reaktionsgefäß werden 100 Tle Isopropanol vorgelegt, auf Rückflußtemperatur erhitzt und innerhalb von 4 Stunden eine Mischung aus 25 Tlen Acrylsäure, 37,5 Tlen Methylmethacrylat, 37,5 Tlen n-Butylacrylat, 0,5 Tlen tert.Dodecylmerkaptan und 3 Tlen Azo-isobuttersäurenitril zugegeben. Anschließend hält man die Temperatur, bis ein vollständiger Umsatz erreicht ist. Die Säurezahl beträgt 190 mg KOH/g, die Grenzviskositätszahl (gemessen in DMF/20°C) ca. 9 ml/g, der Festkörpergehalt 50 %.

<u>Erfindungsgemäße Kombination (C3):</u>

80 Tle der Komponente (A3) , 75 Tle der Komponente (B1) und 17 Tle Diglykoldimethylether werden gemischt. Die partielle Kondensation erfolgt bei 120 - 125 Grad C (in der Aufheizphase destillieren 40 Tle Isopropanol aus der Komponente (A) ab), bis eine Grenzviskositätszahl (gemessen in DMF/20°C) von ca. 19 ml/g erreicht ist. Nach Abkühlen auf 90 Grad C wird der Ansatz mit 6 Tlen Dimethylethanolamin neutralisiert und mit deionisiertem Wasser auf einen Festkörpergehalt von 30 % verdünnt.

<u>Pigmentierter Lack</u> (D1) bis (D3)

In bekannter Weise werden in einer Perlmühle Pigmentpasten hergestellt:

|                                      | (D 1)     | (D 2)     | (D3)      |
| ------------------------------------ | --------- | --------- | --------- |
| Kombination (C1) / 35 %              | 123       | --        | --        |
| Kombination (C2) / 35 %              | --        | 123       | --        |
| Kombination (C3) / 30 %              | --        | --        | 143       |
| deion. Wasser                        | 25        | 25        | 52        |
| Titandioxid (Rutil)                  | 80        | 80        | 80        |
| Bariumsulfat                         | 40        | 40        | 40        |
| Flammruß                             | 0,2       | 0,2       | 0,2       |
| Paste                                | 268,2     | 268,2     | 315,2     |
| Kombination (C1) / 35 %              | 193       | --        | --        |
| Kombination (C2) / 35 %              | --        | 193       | --        |
| Kombination (C3) / 30 %              | --        | --        | 226       |
| Hexamethoxymethylmelamin 100%ig      | 12        | 12        | 12        |
| Lack                                 | 473,2     | 473,2     | 553,2     |
| Festkörpergehalt ber.                | 51,3 %    | 51,3 %    | 43,9 %    |
| pH-Wert                              | ca. 9,0   | ca. 9,0   | ca. 9,0   |
| Auslaufzeit (sec.) gemäß DIN 53 211/20°C | ca. 30 | ca. 30    | ca. 30    |

Pigmentierter Vergleichslack (D4)

Eine Pigmentpaste wird aus 134 Tlen eines 75%igen Bindemittels gemäß Beispiel 1 der AT-PS 328 587 (Komp. A: DCO-Leinöl-Addukt; Komp. B: Polyester aus Triethylenglykol, Phthalsäureanhydrid und Trimethylolpropan; 1 Stunde bei 120 Grad C kondensiert), 88 Tlen Ethylenglykolmonobutylether, 167 Tlen Titandioxid (Rutiltyp), 84 Tlen Bariumsulfat und 0,5 Tlen Flammruß hergestellt. Die Lackpaste wird mit 158 Tlen Harz, 75%ig, 33 Tlen Hexamethoxymethylmelamin(100%ig), 41 Tlen Ethylenglykolmonobutylether und 209 Tlen deionisiertem Wasser komplettiert. Der Lack weist einen Festkörpergehalt von ca. 55 %, einen pH-Wert von ca. 8 und eine Auslaufzeit gemäß DIN 53 211/20°C von ca. 30 Sekunden auf.

Ergebnisse der lacktechnischen Prüfung:

Die Lacke werden mit Druckluftpistole auf nicht vorbehandeltes Stahlblech appliziert und bei 120 Grad C, 140 Grad C und 160 Grad C eingebrannt. Die Filme weisen eine Trockenfilmstärke von 25 bis 30 µm auf. Die Ergebnisse sind in der nachstehenden Tabelle zusammengefaßt.

| | Lack (D 1) | | | Lack (D 2) | | | Lack (D 3) | | | Lack (D 4) (Vergleichsbeispiel) | | |
|---|---|---|---|---|---|---|---|---|---|---|---|---|
| Einbrennbed. 20 min. | 120°C | 140°C | 160°C | 120°C | 140°C | 160°C | 120°C | 140°C | 160°C | 120°C | 140°C | 160°C |
| Pendelhärte nach KÖNIG (Sekunden) | 140 | 160 | 160 | 140 | 180 | 180 | 150 | 170 | 170 | 80 | 150 | 160 |
| Tiefung nach ERICHSEN (mm) | 4 - 5 | 4 | 4 | 5 | 6 | 6 | 2-3 | 3 | 3 | 8 | 3 | 2 |
| Salzsprühtest ASTM B 117/64 240 Stunden Ablösung am Kreuzschnitt in mm | 3 - 8 | 3 - 5 | 2 - 3 | 4-7 | 3-5 | 2-3 | 7-10 | 5-8 | 5-8 | total | 30 - 40 | 30 - 50 |
| Tropentest 240 Stunden, 40 Grad C Beurteilung nach DIN 50 017 | m0 g0 | m0 g0 | m0 g0 | m0 g0 | m0 g0 | m0 g0 | m0 g0 | m0 g0 | m0 g0 | m5 g5 | m4 g2 | m2 g2 |

## Patentansprüche

1. Verfahren zur Herstellung von lösemittelarmen, nach teilweiser oder vollständiger Überführung in die Ammonium-und/oder Aminsalzform wasserverdünnbaren Bindemitteln für ofentrocknende Überzugsmittel auf der Basis von Kombinationen einer filmbildende wasserverdünnbaren Polycarboxylverbindung (PC-Komponente) mit einer filmbildenden wasserunlöslichen Polyhydroxylverbindung (PH-Komponente), dadurch gekennzeichnet, daß man
    (A) 10 - 90 Gew.-%, vorzugsweise 20 - 50 Gew.-%,

7

(Aa) eines oder mehrerer Anlagerungsprodukte von Maleinsäure(anhydrid) an ungesättigte Öle und/oder Fettsäuren, deren Anhydridgruppen mit Wasser und/oder Monoalkoholen aufgeschlossen sind und welche eine Säurezahl zwischen 50 und 400 mg KOH/g und eine Grenzviskositätszahl von 4,5 - 8,0 ml/g (gemessen in N,N-Dimethylformamid (DMF) bei 20 Grad C) aufweisen

und/oder

(Ab) eines oder mehrerer Copolymerisate mit einer Säurezahl zwischen 100 und 200 mg KOH/g und einer Grenzviskositätszahl zwischen 4,5 und 8 ml/g (gemessen in DMF/20 Grad C)

mit

(B) 90 - 10 Gew.-%, vorzugsweise 50 bis 80 Gew.-% eines unter den Verarbeitungsbedingungen praktisch wasserunlöslichen Epoxidharz-Aminadduktes, welches eine Hydroxylzahl zwischen 50 und 300 mg KOH/g und eine Grenzviskositätszahl von 9 bis 12 ml/g, vorzugsweise zwischen 10 und 11 ml/g (gemessen in DMF/20 Grad C) aufweist,

bei 80 - 140 Grad C bis zu einer Grenzviskositätszahl von 14 - 19 ml/g (gemessen in DMF/20 Grad C) kondensiert.

**2.** Verfahren nach Anspruch 1, dadurch gekennzeichnet, daß als Epoxidharz-Aminaddukte Umsetzungsprodukte von Diepoxidharzen vom Bisphenol A-Typ mit sekundären Aminen, vorzugsweise Dialkanolaminen, eingesetzt werden.

**3.** Verfahren nach den Ansprüchen 1 und 2, dadurch gekennzeichnet, daß die Epoxidharze vor der Umsetzung mit dem Amin durch difunktionelle Carboxyl- oder Hydroxylverbindungen unter Kettenverlängerung modifiziert werden.

**4.** Verfahren nach den Ansprüchen 1 bis 3, dadurch gekennzeichnet, daß die gewünschte Grenzviskosität mittels gezielter Molekülvergrößerung durch Umsetzung der Epoxidharz-Aminaddukte mit Di- oder Polyisocyanaten gegebenenfalls in Gegenwart weiterer Hydroxylgruppen tragender Polykondensations- oder Polyadditionsharzen, erreicht wird.

**5.** Verfahren nach den Ansprüchen 1 bis 4, dadurch gekennzeichnet, daß solche Komponenten (A) und (B) kombiniert werden, deren Grenzviskositätswerte sich zueinander so verhalten, daß der Quotient aus der GVZ(B) und der GVZ(A) zwischen 1,4 und 2,7 liegt.

**6.** Verwendung der nach den Ansprüchen 1 bis 5 hergestellten Bindemittel in Kombination mit Phenol- und/oder Aminoharzen als Vernetzungskomponenten zur Formulierung von wasserverdünnbaren Lakken, insbesondere Grundierungen, Einschichtlacken und Füllern.

**Claims**

**1.** Process for the preparation of low-solvent binders, which can be diluted with water after partial or complete conversion into the ammonium and/or amine salt form, for oven-drying coating agents, based on combinations of a film-forming water-dilutable polycarboxy compound (PC component) with a film-forming water-insoluble polyhydroxy compound (PH component), characterised in that

(A) 10-90% by weight, preferably 20-50% by weight,

(Aa) of one or more addition products of maleic acid (anhydride) with unsaturated oils and/or fatty acids, the anhydride groups of which are opened up with water and/or monoalcohols and which have an acid number of between 50 and 400 mg of KOH/g and a limiting viscosity number of 4.5-8.0 ml/g (measured in N,N-dimethylformamide (DMF) at 20 degrees C)

and/or

(Ab) of one or more copolymers having an acid number of between 100 and 200 mg of KOH/g and a limiting viscosity number of between 4.5 and 8 ml/g (measured in DMF/20 degrees C)

are subjected to a condensation reaction with

(B) 90-10% by weight, preferably 50 to 80% by weight, of an epoxy resin-amine adduct which is practically water-insoluble under the processing conditions and has a hydroxyl number of between 50 and 300 mg of KOH/g and a limiting viscosity number of 9 to 12 ml/g, preferably between 10 and 11 ml/g (measured in DMF/20 degrees C),

at 80-140 degrees C up to a limiting viscosity number of 14-19 ml/g (measured in DMF/20 degrees C).

**2.** Process according to Claim 1, characterised in that reaction products of diepoxy resins of bisphenol A type with secondary amines, preferably dialkanolamines, are employed as the epoxy resin-amine adducts.

3. Process according to Claims 1 and 2, characterised in that, before the reaction with the amine, the epoxy resins are modified by difunctional carboxy or hydroxy compounds, with chain lengthening.

4. Process according to Claims 1 to 3, characterised in that the desired limiting viscosity is achieved by means of controlled molecular enlargement by reaction of the epoxy resin-amine adducts with di- or polyisocyanates, if appropriate in the presence of other polycondensation or polyaddition resins carrying hydroxyl groups.

5. Process according to Claims 1 to 4, characterised in that those components (A) and (B), the limiting viscosity values of which bear a relation to one another such that the quotient of the LVN(B) and the LVN(A) is between 1.4 and 2.7, are combined.

6. Use of the binders prepared according to Claims 1 to 5, in combination with phenolic and/or amino resins, as crosslinking components for formulation of water-dilutable coatings, in particular primers, one-coat varnishes and fillers.

## Revendications

1. Procédé de préparation de liants pauvres en solvants, diluables à l'eau après conversion partielle ou totale en la forme de sel d'ammonium et/ou d'amine pour revêtements séchant au four à base de combinaisons d'un composé polycarboxylé diluable à l'eau filmogène (composant PC) et d'un composé polyhydroxylé insoluble dans l'eau filmogène (composant PH), caractérisé en ce que l'on condense
   (A) 10 à 90% en poids, de préférence 20 à 50% en poids,
   (Aa) d'un ou plusieurs produits d'addition d'acide (anhydride) maléique sur des huiles insaturées et/ou des acides gras insaturés dont les groupes anhydride sont ouverts avec de l'eau et/ou des monoalcools et qui présentent un indice d'acide compris entre 50 et 400 mg de KOH/g et un indice de viscosité limite (mesuré dans le N,N-diméthylformamide (DMF) à 20°C) de 4,5 à 8,0 ml/g
   et/ou
   (Ab) d'un ou plusieurs copolymères présentant un indice d'acide compris entre 100 et 200 mg de KOH/g et un indice de viscosité limite (mesuré dans le DMF à 20°C) compris entre 4,5 et 8 ml/g
   avec
   (B) 90 à 10% en poids, de préférence 50 à 80% en poids, d'un produit d'addition résine époxydique-amine pratiquement insoluble dans l'eau dans les conditions de la mise en oeuvre, qui présente un indice d'hydroxyle compris entre 50 et 300 mg de KOH/g et un indice de viscosité limite (mesuré dans le DMF à 20°C) de 9 à 12 ml/g, de préférence compris entre 10 et 11 ml/g,
   à 80-140°C jusqu'à un indice de viscosité limite (mesuré dans le DMF à 20°C) de 14 à 19 ml/g.

2. Procédé selon la revendication 1, caractérisé en ce que l'on utilise comme produits d'addition résine époxydique-amine des produits de réaction de résines diépoxydiques de type bisphénol A et d'amines secondaires, de préférence de dialcanolamines.

3. Procédé selon les revendications 1 et 2, caractérisé en ce que, avant la réaction avec l'amine, les résines époxydiques sont modifiées par des composés carboxylés ou hydroxylés difonctionnels avec allongement de chaîne.

4. Procédé selon les revendications 1 à 3, caractérisé en ce que la viscosité limite souhaitée est obtenue par augmentation ciblée de la taille des molécules par réaction des produits d'addition résine époxydique-amine avec des di- ou polyisocyanates, éventuellement en présence de résines de polycondensation ou de polyaddition portant d'autres groupes hydroxyle.

5. Procédé selon les revendications 1 à 4, caractérisé en ce que l'on combine des composants (A) et (B) dont les indices de viscosité limite sont entre eux de telle manière que le quotient de IVL(B) à IVL(A) est compris entre 1,4 et 2,7.

6. Utilisation des liants préparés selon les revendications 1 à 5 en combinaison avec des résines phénoliques et/ou d'amine comme composants de réticulation pour la formulation de peintures diluables à l'eau, en particulier de peintures de fond, de peintures monocouches et d'agents d'allongement.